# EUROPEAN PATENT SPECIFICATION

(11) **EP 1 402 633 B1**
(45) Date of publication and mention of the grant of the patent: **28.02.2007**
(21) Application number: 01951731.7
(22) Date of filing: 25.06.2001
(51) Int. Cl.: H03G 11/04, H04B 1/62

(54) **DATA TRANSMISSION METHOD AND ARRANGEMENT**
DATENÜBERTRAGUNGSVERFAHREN UND -ANORDNUNG
PROCEDE ET ENSEMBLE DE TRANSMISSION DE DONNEES

(43) Date of publication of application: 31.03.2004
(73) Proprietor: Nokia Corporation, 02150 Espoo (FI)
(72) Inventor: PIIRAINEN, Olli, FIN-90100 Oulu (FI); SAARINEN, Samu, FIN-90630 Oulu (FI); VUOPALA, Tapio, FIN-90830 Haukipudas (FI)
(74) Representative: Antila, Harri Jukka Tapani
(86) International application number: PCT/FI2001/000603
(87) International publication number: WO 2003/001664

(56) References cited:
- EP-A2- 1 085 668
- US-A- 5 748 678

## Description

### FIELD OF THE INVENTION

The invention relates to a method and an arrangement for restricting power or amplitude values of a signal in a radio transmitter.

### BACKGROUND OF THE INVENTION

In several data transmission systems linearity of a power amplifier limits the obtainable maximum transmit power, especially when the signal to be transmitted has a high peak-to-mean ratio. In such a case the signal to be transmitted to the power amplifier may exhibit momentary high power or amplitude values that must be taken into account in designing the power amplifier. This means in practice that an output signal of the amplifier is scaled down to a lower power or amplitude level in order to meet the spectral requirements of the data transmission system currently in use. Due to this method called the back-off method, the signal to be amplified is located in an area where the transfer function of the amplifier is more linear. However, a problem is that the back-off method reduces the efficiency of the amplifier and/or the transmitter. Secondly, power amplifiers with a broad linear operating range are expensive and have rather low efficiency. The prior art also teaches methods for clipping signal power peaks. In a prior art clipping method a threshold is set for the power or amplitude values of a signal, and signal components exceeding the threshold are clipped such that the threshold value is determined as the amplitude or the power, and the other signal values are not changed. However, a problem with such a clipping method is that the signal frequency spectrum spreads, i.e. usually the spectrum spreads beyond the frequency band that is used, thus causing interference to other users.

### BRIEF DESCRIPTION OF THE INVENTION

It is an objective of the invention to implement an improved method for restricting a signal in a radio transmitter. This is achieved by a method for restricting a signal in a radio transmitter. This method comprises setting a threshold value and a value sample interval for the signal, searching the modulated signal for maximum values exceeding the threshold value, and determining the instant of occurrence of the maximum value that exceeded the threshold value, searching the modulated signal for additional sample values exceeding the threshold value at a distance of one or more value sample intervals from the moment of occurrence of at least one maximum value, forming, by means of the maximum values and additional sample values that were searched for, a signal that represents the part of the modulated signal that exceeds the threshold value, subtracting from the modulated signal the formed signal representing the part that exceeds the threshold value.

The invention also relates to a method for restricting a signal in a radio transmitter. This method comprises setting a threshold value and a value sample interval for the signal, combining, in a predetermined manner, the signals modulated for different carriers, searching the modulated signal for maximum values exceeding the threshold value, and determining the instant of occurrence of the maximum value that exceeded the threshold value, searching the modulated signal for additional sample values exceeding the threshold value at a distance of one or more value sample intervals from the moment of occurrence of at least one maximum value, forming, by means of the maximum values and additional sample values that were searched for, a signal that represents the part of the combined modulated signal that exceeds the threshold value, subtracting from the combined modulated signal the formed signal representing the part that exceeds the threshold value.

The invention further relates to an arrangement implementing the method for restricting a signal in a radio transmitter. The arrangement comprises means for setting a threshold value and a value sample interval for the signal, the arrangement comprises means for searching the modulated signal for maximum values exceeding the threshold value, and for determining the instant of occurrence of the maximum value that exceeded the threshold value, the arrangement comprises means for searching the modulated signal for additional sample values exceeding the threshold value at a distance of one or more value sample intervals from the moment of occurrence of at least one maximum value, the arrangement comprises means for forming, by means of the maximum values and additional sample values that were searched for, a signal that represents the part of the modulated signal that exceeds the threshold value, the arrangement comprises means for subtracting from the modulated signal the formed signal representing the part that exceeds the threshold value.

The invention also relates to an arrangement implementing the method for restricting a signal in a radio transmitter. The arrangement comprises means for setting a threshold value and a value sample interval for the signal, the arrangement comprises means for combining, in a predetermined manner, the signals modulated for different carriers, the arrangement comprises means for searching the modulated signal for maximum values exceeding the threshold value, and for determining the instant of occurrence of the maximum value that exceeded the threshold value, the arrangement comprises means for searching the modulated signal for additional sample values exceeding the threshold value at a distance of one or more value sample intervals from the moment of occurrence of at least one maximum value, the arrangement comprises means for forming, by means of the maximum values and additional sample values that were searched for, a signal that represents the part of the modulated signal that exceeds the threshold value, the arrangement comprises means for subtracting from the modulated signal the formed signal representing the part that exceeds the threshold value.

The preferred embodiments of the invention are disclosed in the dependent claims.

The invention is based on setting a threshold value for a modulated signal and determining a value sample interval for sampling the signal. The threshold value is preferably determined for power or amplitude values. The next step comprises combining the signals modulated for different carriers, if the system employs multiple carriers. Next, the modulated signal is searched for additional sample values exceeding the threshold value. Additional sample values can be located before and/or after the maximum value. The located maximum values and additional sample values are used to form a signal which represents the part of the combined modulated signal exceeding the power or amplitude threshold value. This signal is subtracted from the modulated signal.

The method and the arrangement according to the invention provide several advantages. The clipping of signal power or amplitude values according to the method minimizes spectral spreading, and the clipping of the signal therefore causes less interference to other system users. Furthermore, due to the improved efficiency of the power amplifier less transmit power is needed.

### BRIEF DESCRIPTION OF THE FIGURES

In the following, the invention will be described in greater detail in connection with preferred embodiments with reference to the accompanying drawings, in which
Figure 1 shows an example of a telecommunication system,
Figure 2 shows another example of a telecommunication system,
Figure 3 is a flowchart illustrating method steps for restricting the power or amplitude level in a radio transmitter,
Figure 4 illustrates determination of error vector magnitude,
Figures 5A and 5B show examples of an unclipped signal and a clipped signal,
Figure 6 shows an example of a transmitter structure where the method for restricting the power or amplitude level can be applied,
Figure 7 illustrates an example of the structure of a clipping block,
Figure 8 shows a complementary cumulative distribution function (CCDF) obtained as a result of simulation.

### DETAILED DESCRIPTION OF THE EMBODIMENTS

The solution according to the invention is particularly applicable to a multicarrier code division multiple access (MC-CDMA) system employing a direct sequence (DS) technique. Other possible applications include satellite systems, military telecommunication systems and private, non-cellular networks. However, the solution according to the invention is not restricted thereto.

The following example describes the preferred embodiments of the invention in a universal mobile telephone system (UMTS), without restricting the invention thereto, however.

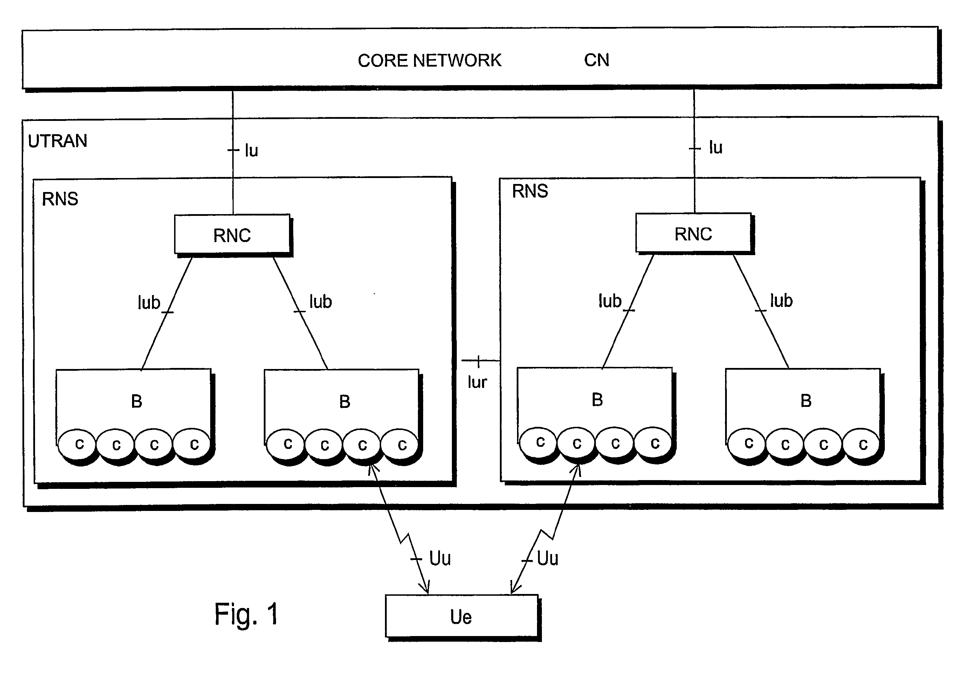

With reference to Figure 1, the structure of a mobile telephone system will be described by way of an example. The main elements of a mobile telephone system are a core network CN, a UMTS terrestrial radio access network UTRAN and a user equipment Ue. The interface between the CN and the UTRAN is called lu, and the air interface between the UTRAN and the Ue is called Uu.

The UTRAN consists of radio network subsystems RNS. The interface between RNSs is called lur. An RNS consists of a radio network controller RNC and one or more nodes B. The interface between an RNC and node B is called lub. The coverage area of node B, i.e. a cell, is denoted in the figure by C.

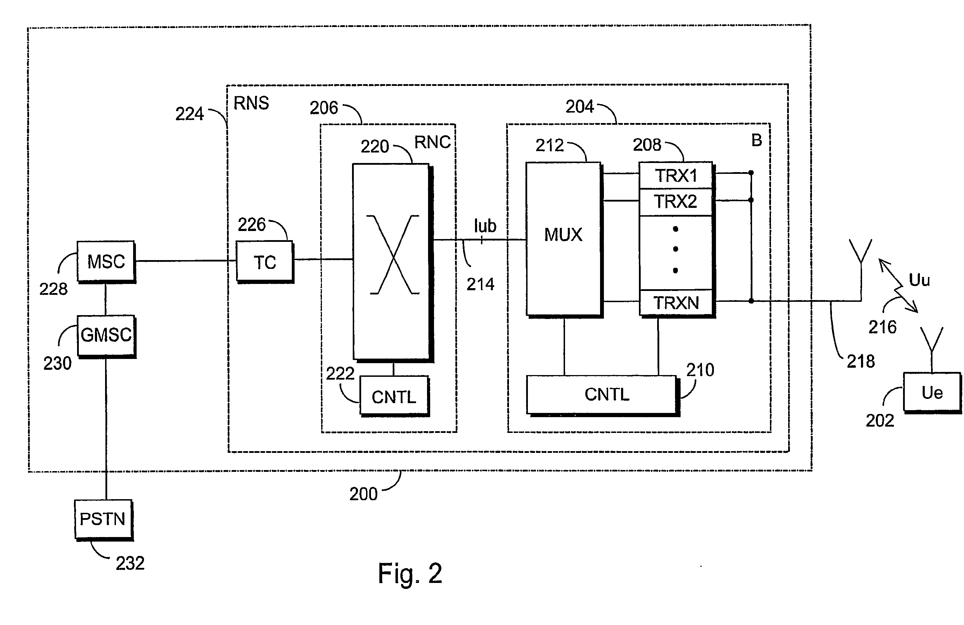

The illustration in Figure 1 is rather general, wherefore Figure 2 shows a more detailed example of a cellular radio system. Figure 2 only shows the essential blocks, but it is evident for those skilled in the art that a conventional cellular radio network also comprises other functions and structures, which do not have to be described in greater detail herein. The details of the cellular radio system may differ from those shown in Figure 2, but these differences are not significant for the invention.

A cellular radio network typically comprises a fixed network infrastructure, i.e. a network part 200, and subscriber terminals 202, which may be fixed, located in a vehicle or portable hand-held terminal equipments, such as mobile phones or portable computers that can be used to communicate with a radio communications system. The network part 200 comprises base stations 204. A base station corresponds to node B shown in the previous figure. Several base stations 204 are in turn controlled in a centralized manner by a radio network controller 206 communicating with them. A base station 204 comprises transceivers 208 and a multiplexer unit 212.

The base station 204 further comprises a control unit 210, which controls the operation of the transceivers 208 and the multiplexer 212. The multiplexer 212 places traffic and control channels used by several transceivers 208 on a single transmission link 214. The transmission link 214 forms an interface lub.

The transceivers 208 of the base station 204 are connected to an antenna unit 218, which implements a radio connection 216 to the subscriber terminal 202. The structure of the frames transmitted over the radio connection 216 is specified in each system and it is called an air interface Uu.

The radio network controller 206 comprises a group switching field 220 and a control unit 222. The group switching field 220 is used to switch speech and data and to combine signalling circuits. A radio network subsystem 224 consisting of the base station 204 and the radio network controller 206 also comprises a transcoder 226. The transcoder 226 is usually situated as close to a mobile services switching centre 228 as possible in order that speech can be transmitted in a cellular radio network form between the transcoder 226 and the radio network controller 206, thus saving transmission capacity.

The transcoder 226 adapts different digital speech coding forms used between a public switched telephone network and a radio telephone network to each other, for example from a fixed network form into some other form of the cellular radio network, and vice versa. The control unit 222 performs call control, mobility management, collection of statistical data, and signalling.

Figure 2 further shows the mobile services switching centre 228 and a gateway mobile services switching centre 230, which manages the connections from the mobile telephone system to the outside world, in this case to the public switched telephone network 232.

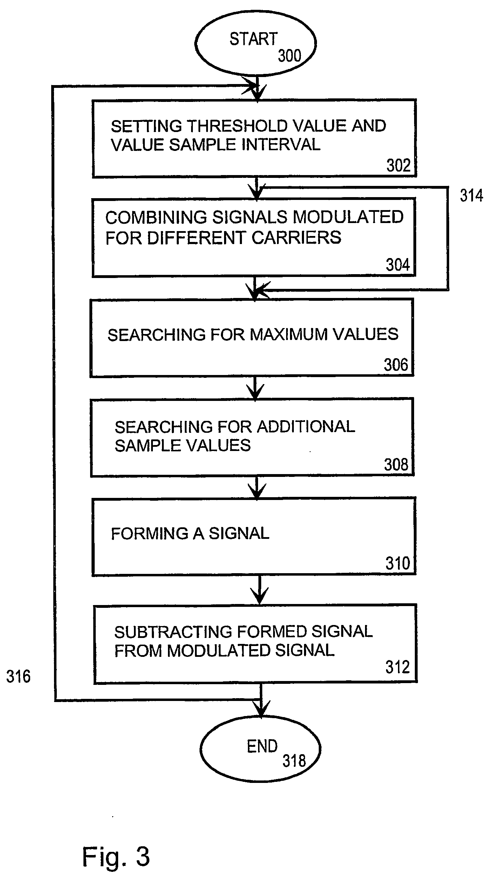

In the following, method steps for restricting the power level in a transmitter will be described with reference to Figure 3. The method is particularly applicable to multicarrier systems, but it can also be used in single-carrier systems. The execution of the method begins in block 300. Block 302 comprises setting a threshold value for a modulated signal, preferably either for power values or amplitude values, and determining a value sample interval, which is typically the sampling interval or a multiple thereof. The value sample interval represents the interval at which power or amplitude samples are taken. When a threshold value is being determined, the following requirements set by the data transmission method used are typically considered: the allowed bandwidth and the stop band attenuation, or the width of the signal frequency band, which are required in order that the signal extends to other frequency bands within predetermined limits, and the required transmit power and the allowed maximum value of the error vector magnitude (EVM) or the maximum value of the peak code domain error used in WDMA systems, which denotes an error in the composed signal resulting from inaccurate modulation. Other factors can also be taken into account in determining the threshold value.

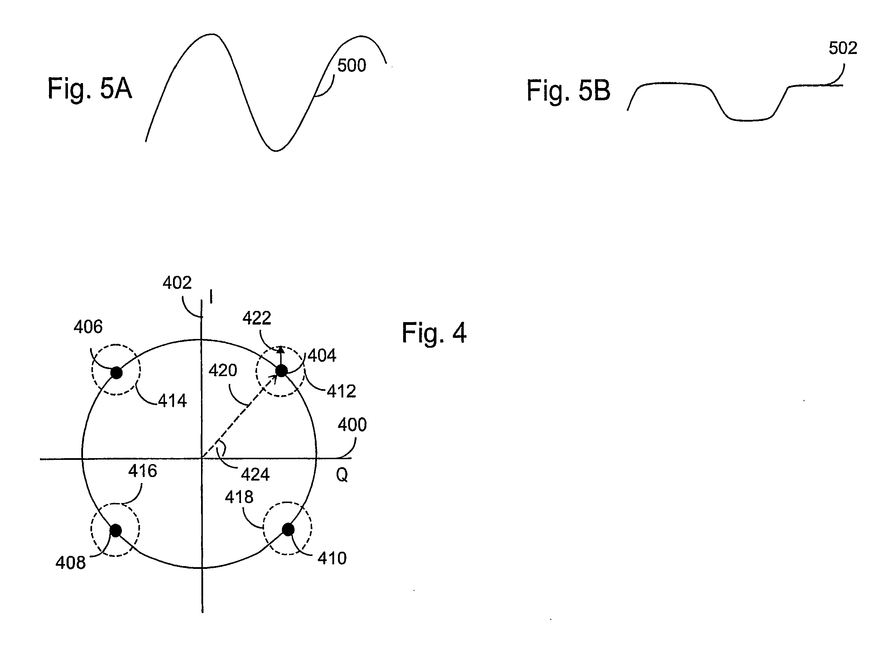

The determination of the error vector magnitude will be described below with reference to Figure 4. Figure 4 shows a simple example of a signal space diagram, which illustrates the location of modulated symbols with respect to one another. The example shows a two-dimensional signal space diagram of a phase-modulated signal when the modulation comprises four levels. The system thus employs four different signals or pulse forms. In the example of Figure 4, points 404, 406, 408 and 410 denote different signals, or states of the signal space diagram. In the different states 404, 406, 408, 410 of the signal space diagram the phase difference of the signal varies. The number of the states in the signal space diagram varies in different modulation methods: the more states the greater the data transmission capacity of the system. As shown in Figure 4, the signal space diagram can be illustrated as a unit circle, but other possible manners of representation also exist. In the figure the horizontal axis 400 shows the quadrature component of the modulated signal and the vertical axis 402 shows the in-phase component. In other words, in this modulation method the signal is divided into in-phase and quadrature components. The circles 412, 414, 416, 418 denote the area where the signals represented by different symbols are actually located due to different types of interference.

A signal space diagram is formed such that the pointer diagrams of the different signals with specified phase differences are placed in the same diagram. Figure 4 shows one pointer diagram 420, which represents the amplitude of one signal. The angle 424 denotes the signal phase difference. The pointer diagram shown in the figure represents the signal *Acos*(*2πf₀t*+*φ*)*,* wherein A is the signal amplitude, f₀ is the average frequency, t is time and φ is the phase difference.

An arrow 422 denotes a vector that represents the distance between the interference-free location of a symbol and its actual location. In this case the modulated signal comprises summed interference. This vector is called error vector magnitude (EVM). The EVM is a prior art indicator for the quality of modulation.

If the system employs multiple carriers, the next step in block 304 is to combine the modulated single-carrier signals in a desired manner. The signals are typically combined by an adder. If the signals are in-phase and quadrature signals, the different modulated single-carrier signals are combined by two adders, such that one adder combines the in-phase components of the signals and the other adder combines the quadrature components. This results in a combined modulated signal.

In block 306, the modulated or the combined modulated signal is searched for maximum values exceeding the threshold value, and the instant of occurrence of the located maximum values is determined, i.e. the instant at which each maximum value appeared. The number of the maximum values to be located depends on the shape of the signal that is examined, particularly on how the signal power level or amplitude changes: the more rapid and/or the greater the changes are, the more maximum values need to be located to obtain a reliable picture.

In block 308, the modulated or the combined modulated signal is searched for additional sample values exceeding the threshold value at a distance of one or more value sample intervals from the instant of occurrence of at least one maximum value, preferably from the instants of occurrence of all the located maximum values. Additional sample values can be searched for either before or after a located maximum value. This is possible if the behaviour of the signal can be predicted accurately enough. However, it is usually most preferable to search for additional sample values both before and after the maximum value. The numbers of the additional sample values to be located before and after the maximum value can be either the same or different, for example one sample value before and one after, one value before and two values after, or two values before and one after. The number of the additional sample values required depends on the application of the method. Furthermore, the value sample interval may vary, but typically it is given a particular value at the beginning of the method.

In block 310, the located maximum values and additional sample values are used to form a signal that represents the part of the modulated or the combined modulated signal that exceeds the threshold value. The signal representing the part of the modulated or the combined modulated signal that exceeds the threshold value is preferably formed by filtering an impulse sequence signal that consists of a maximum value and additional values. In such a case the signal typically resembles a pseudonoise signal that adds additive noise to the signal, i.e. for example it lengthens the error vector magnitude. By means of filtration the bandwidth can be restricted to suit the data transmission method currently used. The filter is implemented in a prior art manner, for example by means of a programmable finite impulse response (FIR) filter, in which case the filter response can be determined as desired. It should be noted that most of the impulse values arriving at the filter are zero, which makes the implementation of the filter less complicated.

In block 312, the formed signal representing the part that exceeds the threshold value is subtracted from the modulated or the combined modulated signal. Figures 5a and 5b illustrate an example of an unclipped modulated or a combined modulated signal and a clipped modulated or a combined modulated signal. Figure 5a shows one unclipped signal 500. Figure 5b shows the signal 500 clipped in a desired manner 502. The figures show that the clipped signal has a shorter range of variation of the amplitude and/or power values.

Arrow 314 shows the different embodiments of the method in case of a single-carrier system or a multicarrier system. Arrow 316 shows the repeatability of the method. The execution of the method ends in block 318.

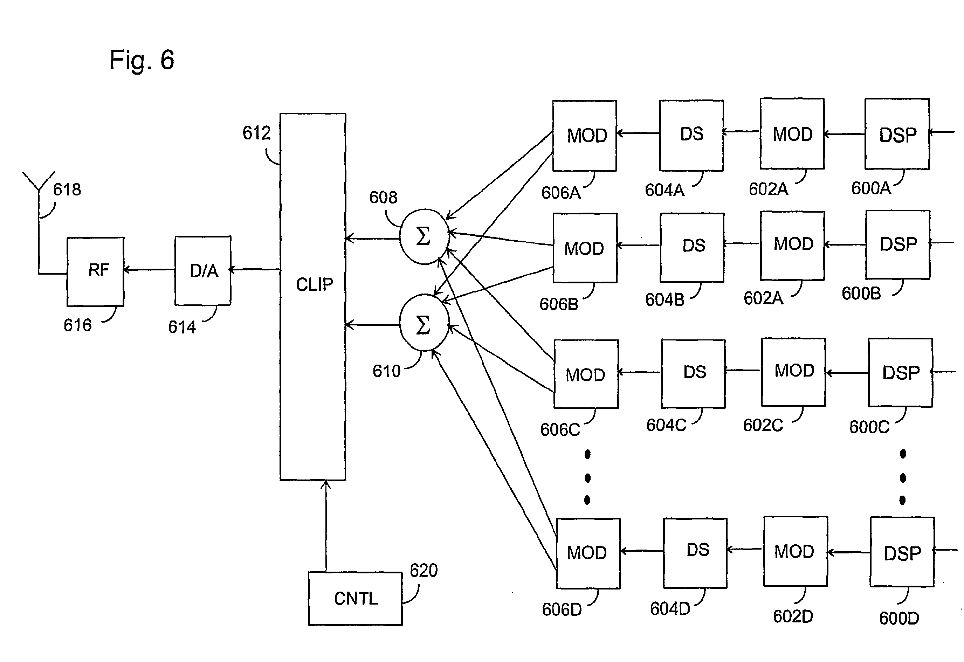

In the following, a block diagram shown in Figure 6 is used to illustrate a transmitter where the aforementioned method can be applied. It is evident to a person skilled in the art that a transceiver can also comprise parts other than those shown in Figure 6. The transmitter illustrated in Figure 6 is a multicarrier transmitter. The transmitter can also be a single-carrier transmitter. It should be noted that unlike in the figure, the radio parts of the transmitter and the receiver could also be combined, as well as for example a signal-processing block. Figure 6 shows a multicarrier transmitter employing four different carriers. However, the number of the carriers to be used as well as the number of the signal-processing blocks 600A-600D, data modulators 602A-602D, spreading blocks 604A-604D, and modulators 606A-606D required in a multicarrier system varies in different applications.

The signal-processing blocks 600A to 600D represent the parts of the base station equipment that are required to form user speech or data in the transmitter. A signal, or a string of information consisting of symbols, i.e. one or more bits, is processed in the transmitter in different manners. The signal processing, which includes for example coding and encryption, is usually carried out in a digital signal processor DSP. If the transmission in the system is carried out in frames, which consist of time slots, the frames are typically formed and symbols are interleaved in the DSP. The purpose of signal coding and interleaving is to ensure that the transmitted information can be restored in the receiver, even if all the information bits cannot be received. In blocks 602A to 602D, the data signal is modulated by a desired modulation method. In the example shown in Figure 6, the data modulators 602A-602D implement a modulation method where the signal is divided into in-phase I and quadrature Q components. An example of such a modulation method is quadrature phase shift keying (QPSK) and modifications thereof, such as the offset QPSK method.

In blocks 604A to 604D, the narrowband data signals modulated onto carriers are multiplied by a spreading code in order to spread the band. An example of such a wideband system is the UMTS. If the system utilizes a narrow band, the band will not be spread. A narrowband signal can be converted into a wideband form, such as a spread spectrum signal, also by some other prior art method.

The modulation carried out in blocks 606A to 606D is related to multicarrier systems where different carriers must be organized on the frequency domain in a manner applicable to the system used currently. It is thus possible to provide one transmitter with several carriers. The modulation in blocks 606A to 606D can be implemented in a prior art manner.

Since the signal is in the in-phase and quadrature component forms after the single-carrier modulator, the multicarrier modulator comprises two adders 608, 610, one of which adds together the in-phase components of the different carriers and the other one adds together the quadrature components thereof. If the modulation method used does not convert the modulated carrier into a divided form, there is only one adder. The summation process can also be carried out in steps, i.e. first a desired number of the outputs of the single-carrier modulators are added together, whereafter the obtained intermediate results of summation are added to form a final sum signal. For example, if there are eight single-carrier modulators, it is possible to first add together four signals, whereafter the intermediate summation results are added together. There may also be more than two successive steps of summation. This embodiment can be advantageous when there are several single-carrier modulators.

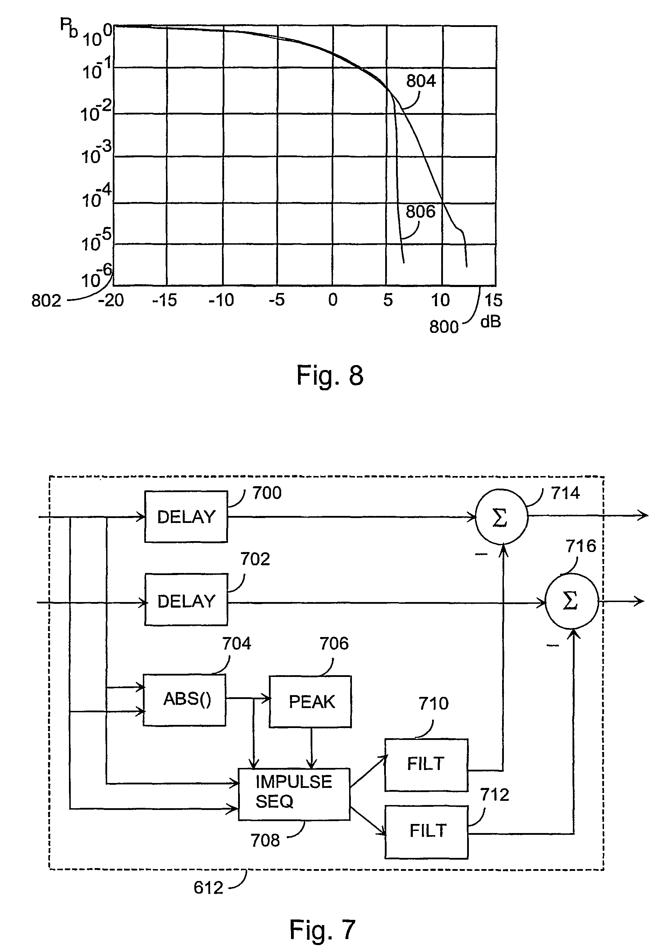

A clipping block 612 comprises clipping the power or amplitude levels exceeding the threshold value in the manner described in connection with Figure 3. An example of the structure of the clipping block 612 will be described below with reference to Figure 7.

A signal is converted from a digital into an analogue form in block 614. RF parts 616 up-convert the signal onto a selected transmission frequency either directly or by first converting the signal onto an intermediate frequency, whereafter the signal is amplified and filtered, if required. The antenna 618 can be either a single antenna or an array antenna consisting of several antenna elements. If both the transmitter and the receiver use the same antenna, a duplex filter is needed to separate the signal to be transmitted from the signal to be received.

Block 620 is a control block that controls the operation of the clipping block 612, for example determines the threshold for clipping, which is referred to in the present application as a threshold value. When a threshold value is being determined, the following requirements set by the data transmission method used are typically taken into account: the allowed bandwidth and the stop band attenuation, or the width of the signal frequency band, which are required in order that the signal extends to other frequency bands within predetermined limits, and the required transmit power and the allowed maximum value of the error vector magnitude (EVM), or the maximum value of the peak code domain error used in UMTSs, representing the greatest possible code timing error. Other factors can also be taken into account in setting the threshold value. The control block 620 can also control the operation of the other blocks.

With reference to Figure 7, an example of the structure of the clipping block 612 will be described below. The illustrated clipping block is intended for a signal divided into in-phase and quadrature components, which thus require two delay elements 700, 702, two filters 710, 712, and two adders 714, 716. If the signal to be clipped is not divided into different components, the clipping block only comprises one delay element, one filter and one adder. The delay elements 700, 702 delay the modulated signal for the duration of the clipping process.

In block 704, the absolute value or the square thereof is determined for the signal to be clipped. The square of the absolute value is preferable in the case of complex signals (typically a signal divided into in-phase and quadrature components), since a complex signal can thus be represented in a real-value form (i² = -1).

The absolute value signal is then applied to block 706, where the maximum value of the power or amplitude is searched for. The maximum value must also exceed a predetermined threshold value. Block 708 comprises searching for additional sample values, which are placed at intervals of an additional sample interval or a multiple thereof from the maximum value. Additional sample values are preferably searched for both before and after the maximum value. The number of the additional sample values varies in each situation. The maximum value and the additional sample values are used to form an impulse sequence. The filters 710, 712 restrict the frequency band of the impulse sequence to a desired band, which is preferably the band used over the radio path. Finally as shown in the example of the figure, the in-phase and quadrature components of the signal are applied to the adders 714, 716, which subtract from the modulated signal a signal representing the part of the modulated signal that exceeds the threshold value. Power or amplitude values exceeding the threshold value can be clipped in this manner. If the signals comprise in-phase and quadrature components, the subtraction is carried out separately for in-phase components and quadrature components. If no value exceeding the threshold value is found, a signal representing the part of the modulated signal that exceeds the threshold value is not generated.

The signal that represents the part of the modulated signal exceeding the threshold value increases the error vector magnitude, which must be taken into account when the threshold value is being set.

The invention is implemented for example by means of software, in which case the base station 204 comprises a microprocessor, where the functions of the method described above are carried out in the form of software. The invention can also be implemented for example by means of specific equipment providing the required functions, such as an application-specific integrated circuit (ASIC), or separate logic components.

Figure 8 shows an example of the result of simulation in a system with two carriers. The value sample interval is set to 6 and the threshold value to 5.5 dB above average amplitude. In Figure 8, the horizontal axis 800 shows the average transmit power of a signal in decibels and the vertical axis 802 shows the likelihood for the proportion of time the signal amplitude stays above the predetermined threshold value. The scale on the vertical axis is logarithmic. Curve 804 illustrates an unclipped signal and curve 806 represents a clipped or amplitude-restricted signal. The figure shows that the clipping of amplitude peaks from a modulated signal considerably evens out variation in the amplitude of the signal to be transmitted at high transmit powers.

Even though the invention is described above with reference to an example according to the accompanying drawings, it is evident that the invention is not restricted thereto but it can be modified in several manners within the scope of the inventive idea disclosed in the appended claims.

## Claims

1. A method for restricting a signal in a radio transmitter,
**characterized by**
(302) setting a threshold value and a value sample interval for the signal,
(306) searching the modulated signal for maximum values exceeding the threshold value, and determining the instant of occurrence of the maximum value that exceeded the threshold value,
(308) searching the modulated signal for additional sample values exceeding the threshold value at a distance of one or more value sample intervals from the moment of occurrence of at least one maximum value,
(310) forming, by means of the maximum values and additional sample values that were searched for, a signal that represents the part of the modulated signal that exceeds the threshold value,
(312) subtracting from the modulated signal the formed signal representing the part that exceeds the threshold value.

2. A method for restricting a signal in a radio transmitter,
**characterized by**
(302) setting a threshold value and a value sample interval for the signal,
(304) combining, in a predetermined manner, the signals modulated for different carriers,
(306) searching the modulated signal for maximum values exceeding the threshold value, and determining the instant of occurrence of the maximum value that exceeded the threshold value,
(308) searching the modulated signal for additional sample values exceeding the threshold value at a distance of one or more value sample intervals from the moment of occurrence of at least one maximum value,
(310) forming, by means of the maximum values and additional sample values that were searched for, a signal that represents the part of the combined modulated signal that exceeds the threshold value,
(312) subtracting from the combined modulated signal the formed signal representing the part that exceeds the threshold value.

3. A method according to claim 1 or 2, **characterized by** setting a threshold value for power values of a modulated signal.

4. A method according to claim 1 or 2, **characterized by** setting a threshold value for amplitude values of a modulated signal.

5. A method according to claim 1 or 2, **characterized by** searching for at least one additional sample value before the maximum value.

6. A method according to claim 1 or 2, **characterized by** searching for at least one additional sample value after the maximum value.

7. A method according to claim 1 or 2, **characterized by** searching for additional sample values before and after the maximum value.

8. A method according to claim 1 or 2, **characterized in that** the signal representing the part of the modulated or the combined modulated signal exceeding the threshold value resembles at least substantially a pseudonoise signal.

9. A method according to claim 1 or 2, **characterized in that** the value sample interval equals the sampling interval.

10. A method according to claim 1 or 2, **characterized by** forming a signal representing the part of the modulated or the combined modulated signal that exceeds the threshold value by filtering an impulse sequence signal consisting of the maximum value and the additional values.

11. A method according to claim 1 or 2, **characterized by** setting a threshold value in view of the maximum value predetermined for error vector magnitude.

12. A method according to claim 1 or 2, **characterized by** setting a threshold value in view of the frequency bandwidth of the signal representing the part of the modulated or the combined modulated signal that exceeds the threshold value, so that the signal representing the part of the modulated or the combined modulated signal exceeding the threshold value extends to other frequency bands within predetermined limits.

13. A method according to claim 1 or 2, **characterized by** setting a threshold value in view of the maximum value predetermined for a peak code domain error.

14. A method according to claim 1 or 2, **characterized by** forming a signal representing the part of the modulated or the combined modulated signal that exceeds the threshold value by filtering an impulse sequence signal consisting of the maximum value and the additional values by a programmable filter.

15. An arrangement for restricting a signal in a radio transmitter,
**characterized in that**
the arrangement comprises means (620) for setting a threshold value and a value sample interval for the signal,
the arrangement comprises means (706) for searching the modulated signal for maximum values exceeding the threshold value, and for determining the instant of occurrence of the maximum value that exceeded the threshold value,
the arrangement comprises means (708) for searching the modulated signal for additional sample values exceeding the threshold value at a distance of one or more value sample intervals from the moment of occurrence of at least one maximum value,
the arrangement comprises means (708) for forming, by means of the maximum values and additional sample values that were searched for, a signal that represents the part of the modulated signal that exceeds the threshold value,
the arrangement comprises means (714, 716) for subtracting from the modulated signal the formed signal representing the part that exceeds the threshold value.

16. An arrangement for restricting a signal in a radio transmitter,
**characterized in that**
the arrangement comprises means (620) for setting a threshold value and a value sample interval for the signal,
the arrangement comprises means (608, 610) for combining, in a predetermined manner, the signals modulated for different carriers,
the arrangement comprises means (706) for searching the modulated signal for maximum values exceeding the threshold value, and for determining the instant of occurrence of the maximum value that exceeded the threshold value,
the arrangement comprises means (708) for searching the modulated signal for additional sample values exceeding the threshold value at a distance of one or more value sample intervals from the moment of occurrence of at least one maximum value,
the arrangement comprises means (708) for forming, by means of the maximum values and additional sample values that were searched for, a signal that represents the part of the modulated signal that exceeds the threshold value,
the arrangement comprises means (714, 716) for subtracting from the modulated signal the formed signal representing the part that exceeds the threshold value.

17. An arrangement according to claim 15 or 16, **characterized by** setting a threshold value for power values of a modulated signal.

18. An arrangement according to claim 15 or 16, **characterized by** setting a threshold value for amplitude values of a modulated signal.

19. An arrangement according to claim 15 or 16, **characterized by** searching for at least one additional sample value before the maximum value.

20. An arrangement according to claim 15 or 16, **characterized by** searching for at least one additional sample value after the maximum value.

21. An arrangement according to claim 15 or 16, **characterized by** searching for additional sample values before and after the maximum value.

22. An arrangement according to claim 15 or 16, **characterized in that** the signal representing the part of the modulated or the combined modulated signal that exceeds the threshold value resembles at least substantially a pseudonoise signal.

23. An arrangement according to claim 15 or 16, **characterized in that** the value sample interval equals the sampling interval.

24. An arrangement according to claim 15 or 16, **charac**t**erized by** forming a signal representing the part of the modulated or the combined modulated signal that exceeds the threshold value by filtering an impulse sequence signal consisting of the maximum value and the additional values.

25. An arrangement according to claim 15 or 16, **characterized by** setting a threshold value in view of the maximum value predetermined for error vector magnitude.

26. An arrangement according to claim 15 or 16, **characterized by** setting a threshold value in view of the frequency bandwidth of the signal representing the part of the modulated or the combined modulated signal that exceeds the threshold value, so that the signal representing the part of the modulated or the combined modulated signal exceeding the threshold value spreads to other frequency bands within predetermined limits.

27. An arrangement according to claim 15 or 16, **characterized by** setting a threshold value in view of the maximum value predetermined for a peak code domain error.

28. An arrangement according to claim 15 or 16, **characterized by** forming a signal representing the part of the modulated or the combined modulated signal exceeding the threshold value by filtering an impulse sequence signal consisting of the maximum value and the additional values by a programmable filter.

## Patentansprüche

1. Verfahren zum Begrenzen eines Signals in einem Funksender,
**gekennzeichnet durch**
(302) Setzen eines Schwellwerts und eines Abtastintervalls für das Signal,
(306) Durchsuchen des modulierten Signals nach Maximum-Werten, die den Schwellwert überschreiten, und Bestimmen des Auftrittzeitpunkts des Maximum-Werts, der den Schwellwert überschreitet,
(308) Durchsuchen des modulierten Signals nach zusätzlichen Abtastwerten, die den Schwellwert überschreiten, in einem Abstand von einem oder mehrerer Wertabtastintervalle von dem Moment des Auftretens von wenigstens einem Maximum-Wert,
(310) Bilden mittels der Maximum-Werte und zusätzlichen Abtastwerte, nach denen gesucht wurde, ein Signal, das den Teil des modulierten Signals, das den Schwellwert überschreitet, darstellt,
(312) Abziehen des gebildeten Signals, das den den Schwellwert überschreitenden Teil darstellt, von dem modulierten Signal.

2. Verfahren zum Beschränken eines Signals in einem Funksender,
**gekennzeichnet durch**
(302) Setzen eines Schwellwerts und eines Wertabtastintervalls für das Signal,
(304) Kombinieren in einer vorbestimmten Weise der für unterschiedliche Träger modulierten Signale,
(306) Durchsuchen des modulierten Signals nach Maximum-Werten, die den Schwellwert überschreiten, und Bestimmen des Zeitpunkts des Auftretens des Maximum-Werts, der den Schwellwert überschreitet,
(308) Durchsuchen des modulierten Signals nach zusätzlichen Abtastwerten, die den Schwellwert überschreiten, in einem Abstand von einem oder mehreren Wertabtastintervallen von dem Moment des Auftretens von wenigstens einem Maximum-Wert,
(310) Bilden mittels der Maximum-Werte und zusätzlichen Abtastwerte, nach denen gesucht wurde, ein Signal, das den Teil des kombinierten modulierten Signals, das den Schwellwert überschreitet, darstellt,
(312) Abziehen des gebildeten Signals, das den den Schwellwert überschreitenden Teil darstellt, von dem kombinierten modulierten Signal.

3. Verfahren nach Anspruch 1 oder 2, **gekennzeichnet durch** Setzen eines Schwellwerts für Leistungswerte eines modulierten Signals.

4. Verfahren nach Anspruch 1 oder 2, **gekennzeichnet durch** Setzen eines Schwellwerts für Amplitudenwerte eines modulierten Signals.

5. Verfahren nach Anspruch 1 oder 2, **gekennzeichnet durch** Suchen nach wenigstens einem zusätzlichen Abtastwert vor dem Maximum-Wert.

6. Verfahren nach Anspruch 1 oder 2, **gekennzeichnet durch** Suchen nach wenigstens einem zusätzlichen Abtastwert nach dem Maximum-Wert.

7. Verfahren nach Anspruch 1 oder 2, **gekennzeichnet durch** Suchen nach zusätzlichen Abtastwerten vor und nach dem Maximum-Wert.

8. Verfahren nach Anspruch 1 oder 2, **dadurch gekennzeichnet, dass** das Signal, das den Teil des modulierten oder des kombinierten modulierten Signals darstellt, das den Schwellwert überschreitet, wenigstens im Wesentlichen einem Pseudorauschsignal ähnlich ist.

9. Verfahren nach Anspruch 1 oder 2, **dadurch gekennzeichnet, dass** das Wertabtastintervall gleich dem Abtastungsintervall (Sampling Interval) ist.

10. Verfahren nach Anspruch 1 oder 2, **gekennzeichnet durch** Bilden eines Signals, das den Teil des modulierten oder des kombinierten modulierten Signals darstellt, das den Schwellwert überschreitet, mittels Filtern eines Impulsfolgesignals, das aus dem Maximum-Wert und den zusätzlichen Werten besteht.

11. Verfahren nach Anspruch 1 oder 2, **gekennzeichnet durch** Setzen eines Schwellwerts im Hinblick auf den Maximum-Wert, der als Fehlervektorgröße (Error Vector Magnitude) vorbestimmt ist.

12. Verfahren nach Anspruch 1 oder 2, **gekennzeichnet durch** Setzen eines Schwellwerts im Hinblick auf die Frequenzbandbreite des Signals, das den Teil des modulierten oder des kombinierten modulierten Signals darstellt, das den Schwellwert überschreitet, sodass das Signal, das den Teil des modulierten oder des kombinierten modulierten Signals darstellt, das den Schwellwert überschreitet, sich in andere Frequenzbänder innerhalb vorbestimmter Grenzen erstreckt.

13. Verfahren nach Anspruch 1 oder 2, **gekennzeichnet durch** Setzen eines Schwellwerts im Hinblick auf den Maximum-Wert, der als ein Spitzen-Code-Domänen-Fehler (Peak Code Domain Error) vorbestimmt ist.

14. Verfahren nach Anspruch 1 oder 2, **gekennzeichnet durch** Bilden eines Signals, das den Teil des modulierten oder des kombinierten modulierten Signals darstellt, das den Schwellwert überschreitet, mittels Filtern eines Impulsfolgesignals, das aus dem Maximum-Wert und den zusätzlichen Werten besteht, mittels eines programmierbaren Filters.

15. Anordnung zum Beschränken eines Signals in einem Funksender,
**gekennzeichnet dadurch,**
**dass** die Anordnung Mittel (620) zum Setzen eines Schwellwerts und eines Wertabtastintervalls für das Signal umfasst,
**dass** die Anordnung Mittel (706) zum Durchsuchen des modulierten Signals nach Maximum-Werten, die den Schwellwert überschreiten, und zum Bestimmen des Zeitpunkts des Auftretens des Maximum-Werts, der den Schwellwert überschreitet, umfasst,
**dass** die Anordnung Mittel (708) zum Durchsuchen des modulierten Signals nach zusätzlichen Abtastwerten, die den Schwellwert überschreiten, in einem Abstand von einem oder mehreren Wertabtastintervallen von dem Moment des Auftretens des wenigstens einen Maximum-Wertes umfasst,
**dass** die Anordnung Mittel (709) zum Bilden mittels der Maximum-Werte und zusätzlichen Abtastwerte, nach denen gesucht wurde, eines Signals, das den Teil des modulierten Signals darstellt, der den Schwellwert überschreitet, umfasst,
**dass** die Anordnung Mittel (714, 716) zum Abziehen des gebildeten Signals, das den Teil darstellt, der den Schwellwert überschreitet, von dem modulierten Signal umfasst.

16. Anordnung zum Beschränken eines Signals in einem Funksender,
**gekennzeichnet dadurch,**
**dass** die Anordnung Mittel (620) zum Setzen eines Schwellwerts und eines Wertabtastintervalls für das Signal umfasst,
**dass** die Anordnung Mittel (608, 610) zum Kombinieren in einer vorbestimmten Weise der für verschiedene Träger modulierten Signale umfasst,
**dass** die Anordnung Mittel (706) zum Durchsuchen des modulierten Signals nach Maximum-Werten, die den Schwellwert überschreiten, und zum Bestimmen des Zeitpunkts des Auftretens des Maximum-Werts, der den Schwellwert überschreitet, umfasst,
**dass** die Anordnung Mittel (708) zum Durchsuchen des modulierten Signals nach zusätzlichen Abtastwerten, die den Schwellwert überschreiten, in einem Abstand von einem oder mehreren Wertabtasüntervailen von dem Moment des Auftretens des wenigstens einen Maximum-Werts, umfasst,
**dass** die Anordnung Mittel (708) zum Bilden mittels der Maximum-Werte und der zusätzlichen Abtastwerte, nach denen gesucht wurde, eines Signals, das den Teil des modulierten Signals darstellt, das den Schwellwert überschreitet, umfasst,
**dass** die Anordnung Mittel (714, 716) zum Abziehen des gebildeten Signals, das den Teil darstellt, der den Schwellwert überschreitet, von dem modulierten Signal umfasst.

17. Anordnung nach Anspruch 15 oder 16, **gekennzeichnet durch** Setzen eines Schwellwerts für Leistungswerte eines modulierten Signals.

18. Anordnung nach Anspruch 15 oder 16, **gekennzeichnet durch** Setzen eines Schwellwerts für Amplitudenwerte eines modulierten Signals.

19. Anordnung nach Anspruch 15 oder 16, **gekennzeichnet durch** Suchen nach wenigstens einem zusätzlichen Abtastwert vor dem Maximum-Wert.

20. Anordnung nach Anspruch 15 oder 16, **gekennzeichnet durch** Suchen nach wenigstens einem zusätzlichen Abtastwert nach dem Maximum-Wert.

21. Anordnung nach Anspruch 15 oder 16, **gekennzeichnet durch** Suchen nach zusätzlichen Abtastwerten vor und nach dem Maximum-Wert.

22. Anordnung nach Anspruch 15 oder 16, **dadurch gekennzeichnet, dass** das Signal, das den Teil des modulierten oder des kombinierten modulierten Signals darstellt, das den Schwellwert überschreitet, wenigstens im Wesentlichen einem Pseudorauschsignal ähnlich ist.

23. Anordnung nach Anspruch 15 oder 16, **dadurch gekennzeichnet, dass** das Wertabtastintervall gleich dem Abtastungsintervall (Sampling Interval) ist.

24. Anordnung nach Anspruch 15 oder 16, **gekennzeichnet durch** Bilden eines Signals, das den Teil des modulierten oder des kombinierten modulierten Signals darstellt, das den Schwellwert überschreitet, mittels Filtern eines Impulsfiolgesignals, das aus dem Maximum-Wert und den zusätzlichen Werten besteht.

25. Anordnung nach Anspruch 15 oder 16, **gekennzeichnet durch** Setzen eines Schwellwerts im Hinblick auf den Maximum-Wert, der als eine Fehlervektorgröße (Error Vector Magnitude) vorbestimmt ist.

26. Anordnung nach Anspruch 15 oder 16, **gekennzeichnet durch** Setzen eines Schwellwerts im Hinblick auf die Frequenzbandbreite des Signals, das den Teil des modulierten oder des kombinierten modulierten Signals darstellt, das den Schwellwert überschreitet, sodass das Signal, das den Teil des modulierten oder des kombinierten modulierten Signals darstellt, das den Schwellwert überschreitet, in andere Frequenzbänder innerhalb vorbestimmter Grenzen gespreizt ist.

27. Anordnung nach Anspruch 15 oder 16, **gekennzeichnet durch** Setzen eines Schwellwertes im Hinblick auf den Maximum-Wert, der als ein Spitzen-Code-Domänen-Fehler (Peak Code Domain Error) vorbestimmt ist.

28. Anordnung nach Anspruch 15 oder 16, **gekennzeichnet durch** Bilden eines Signals, das den Teil des modulierten oder des kombinierten modulierten Signals darstellt, das den Schwellwert überschreitet, mittels Filtern eines Impulsfolgesignals, das aus dem Maximum-Wert und den zusätzlichen Werten besteht, mittels eines programmierbaren Filters.

## Revendications

1. Procédé de restriction d'un signal dans un émetteur radio,
**caractérisé par**
(302) l'établissement d'une valeur de seuil et d'un intervalle échantillon de valeur pour le signal,
(306) la recherche dans le signal modulé des valeurs maximum dépassant la valeur de seuil, et la détermination de l'instant d'apparition de la valeur maximum qui dépassait la valeur de seuil,
(308) la recherche dans le signal modulé de valeurs échantillons supplémentaires dépassant la valeur de seuil à une distance de un ou plusieurs intervalles échantillons de valeur du moment d'apparition d'au moins une valeur maximum,
(310) la formation, au moyen des valeurs maximum et des valeurs échantillons supplémentaires qui ont été recherchées, d'un signal qui représente la partie du signal modulé qui dépasse la valeur de seuil,
(312) la soustraction du signal modulé du signal formé représentant la partie qui dépasse la valeur de seuil.

2. Procédé de restriction d'un signal dans un émetteur radio,
**caractérisé par**
(302) l'établissement d'une valeur de seuil et d'un intervalle échantillon de valeur pour le signal,
(304) la combinaison, d'une manière prédéterminée, des signaux modulés pour différentes ondes porteuses,
(306) la recherche dans le signal modulé des valeurs maximum dépassant la valeur de seuil, et la détermination de l'instant d'apparition de la valeur maximum qui dépassait la valeur de seuil,
(308) la recherche dans le signal modulé de valeurs échantillons supplémentaires dépassant la valeur de seuil à une distance de un ou plusieurs intervalles échantillons de valeur du moment d'apparition de la ou des valeurs maximum,
(310) la formation, au moyen des valeurs maximum et des valeurs échantillons supplémentaires qui ont été recherchées, d'un signal qui représente la partie du signal modulé combiné qui dépasse la valeur de seuil,
(312) la soustraction du signal modulé combiné du signal formé représentant la partie qui dépasse la valeur de seuil.

3. Procédé selon la revendication 1 ou 2, **caractérisé par** l'établissement d'une valeur de seuil pour les valeurs de puissance d'un signal modulé.

4. Procédé selon la revendication 1 ou 2, **caractérisé par** l'établissement d'une valeur de seuil pour les valeurs d'amplitude d'un signal modulé.

5. Procédé selon la revendication 1 ou 2, **caractérisé par** la recherche d'au moins une valeur échantillon supplémentaire avant la valeur maximum.

6. Procédé selon la revendication 1 ou 2, **caractérisé par** la recherche d'au moins une valeur échantillon supplémentaire après la valeur maximum.

7. Procédé selon la revendication 1 ou 2, **caractérisé par** la recherche de valeurs échantillons supplémentaires avant et après la valeur maximum.

8. Procédé selon la revendication 1 ou 2, **caractérisé en ce que** le signal représentant la partie du signal modulé ou modulé combiné dépassant la valeur de seuil ressemble au moins sensiblement à un signal de pseudo bruit.

9. Procédé selon la revendication 1 ou 2, **caractérisé en ce que** l'intervalle échantillon de valeur est égal au pas d'échantillonnage.

10. Procédé selon la revendication 1 ou 2, **caractérisé par** la formation d'un signal représentant la partie du signal modulé ou modulé combiné qui dépasse la valeur de seuil au moyen du filtrage d'un signal d'impulsion en séquence constitué par la valeur maximum et les valeurs supplémentaires.

11. Procédé selon la revendication 1 ou 2, **caractérisé par** l'établissement d'une valeur de seuil en fonction de la valeur maximum prédéterminée pour l'amplitude d'erreur du vecteur.

12. Procédé selon la revendication 1 ou 2, **caractérisé par** l'établissement d'une valeur de seuil en fonction de la largeur de bande de fréquences du signal représentant la partie du signal modulé ou modulé combiné qui dépasse la valeur de seuil, de façon que le signal représentant la partie du signal modulé ou modulé combiné dépassant la valeur de seuil s'étende à d'autres bandes de fréquences moyennant des limites prédéterminées.

13. Procédé selon la revendication 1 ou 2, **caractérisé par** l'établissement d'une valeur de seuil en fonction de la valeur maximum prédéterminée pour une erreur de domaine de code de crête.

14. Procédé selon la revendication 1 ou 2, **caractérisé par** la formation d'un signal représentant la partie du signal modulé ou modulé combiné qui dépasse la valeur de seuil au moyen du filtrage d'un signal d'impulsion en séquence constitué par la valeur maximum et les valeurs supplémentaires par un filtre programmable.

15. Agencement destiné à restreindre un signal dans un émetteur radio,
**caractérisé en ce que**
l'agencement comprend des moyens (620) destinés à établir une valeur de seuil et un intervalle échantillon de valeur pour le signal,
l'agencement comprend des moyens (706) destinés à rechercher dans le signal modulé des valeurs maximum dépassant la valeur de seuil, et à déterminer l'instant d'apparition de la valeur maximum qui dépassait la valeur de seuil,
l'agencement comprend des moyens (708) destinés à rechercher dans le signal modulé des valeurs échantillons supplémentaires dépassant la valeur de seuil à une distance de un ou plusieurs intervalles échantillons de valeur du moment d'apparition de la ou des valeurs maximum,
l'agencement comprend des moyens (708) destinés à former, au moyen des valeurs maximum et des valeurs échantillons supplémentaires qui ont été recherchées, d'un signal qui représente la partie du signal modulé qui dépasse la valeur de seuil,
l'agencement comprend des moyens (714, 716) destinés à soustraire du signal modulé le signal formé représentant la partie qui dépasse la valeur de seuil.

16. Agencement destiné à restreindre un signal dans un émetteur radio,
**caractérisé en ce que**
l'agencement comprend des moyens (620) destinés à établir une valeur de seuil et un intervalle échantillon de valeur pour le signal,
l'agencement comprend des moyens (608, 610) destinés à combiner, d'une manière prédéterminée, les signaux modulés pour différentes ondes porteuses,
l'agencement comprend des moyens (706) destinés à rechercher dans le signal modulé des valeurs maximum dépassant la valeur de seuil, et à déterminer l'instant d'apparition de la valeur maximum qui dépassait la valeur de seuil,
l'agencement comprend des moyens (708) destinés à rechercher dans le signal modulé des valeurs échantillons supplémentaires dépassant la valeur de seuil à une distance de un ou plusieurs intervalles échantillons de valeur du moment d'apparition d'au moins une valeur maximum,
l'agencement comprend des moyens (708) destinés à former, au moyen des valeurs maximum et des valeurs échantillons supplémentaires qui ont été recherchées, d'un signal qui représente la partie du signal modulé qui dépasse la valeur de seuil,
l'agencement comprend des moyens (714, 716) destinés à soustraire du signal modulé le signal formé représentant la partie qui dépasse la valeur de seuil.

17. Agencement selon la revendication 15 ou 16, **caractérisé par** l'établissement d'une valeur de seuil pour les valeurs de puissance d'un signal modulé.

18. Agencement selon la revendication 15 ou 16, **caractérisé par** l'établissement d'une valeur de seuil pour les valeurs d'amplitude d'un signal modulé.

19. Agencement selon la revendication 15 ou 16, **caractérisé par** la recherche d'au moins une valeur échantillon supplémentaire avant la valeur maximum.

20. Agencement selon la revendication 15 ou 16, **caractérisé par** la recherche d'au moins une valeur échantillon supplémentaire après la valeur maximum.

21. Agencement selon la revendication 15 ou 16, **caractérisé par** la recherche de valeurs échantillons supplémentaires avant et après la valeur maximum.

22. Agencement selon la revendication 15 ou 16, **caractérisé en ce que** le signal représentant la partie du signal modulé ou modulé combiné dépassant la valeur de seuil ressemble au moins sensiblement à un signal de pseudo bruit.

23. Agencement selon la revendication 15 ou 16, **caractérisé en ce que** l'intervalle échantillon de valeur est égal au pas d'échantillonnage.

24. Agencement selon la revendication 15 ou 16, **caractérisé par** la formation d'un signal représentant la partie du signal modulé ou modulé combiné qui dépasse la valeur de seuil au moyen du filtrage d'un signal d'impulsion en séquence constitué par la valeur maximum et les valeurs supplémentaires.

25. Agencement selon la revendication 15 ou 16, **caractérisé par** l'établissement d'une valeur de seuil en fonction de la valeur maximum prédéterminée pour l'amplitude d'erreur du vecteur.

26. Agencement selon la revendication 15 ou 16, **caractérisé par** l'établissement d'une valeur de seuil en fonction de la largeur de bande de fréquences du signal représentant la partie du signal modulé ou modulé combiné qui dépasse la valeur de seuil, de façon que le signal représentant la partie du signal modulé ou modulé combiné dépassant la valeur de seuil s'étende à d'autres bandes de fréquences moyennant des limites prédéterminées.

27. Agencement selon la revendication 15 ou 16, **caractérisé par** l'établissement d'une valeur de seuil en fonction de la valeur maximum prédéterminée pour une erreur de domaine de code de crête.

28. Agencement selon la revendication 15 ou 16, **caractérisé par** la formation d'un signal représentant la partie du signal modulé ou modulé combiné qui dépasse la valeur de seuil au moyen du filtrage d'un signal d'impulsion en séquence constitué par la valeur maximum et les valeurs supplémentaires par un filtre programmable.
